(19) Europäisches Patentamt
European Patent Office
Office européen des brevets

(11) Numéro de publication: **0 187 098**
**A1**

(12) **DEMANDE DE BREVET EUROPEEN**

(21) Numéro de dépôt: **85402545.9**

(51) Int. Cl.⁴: **C 09 K 5/04**

(22) Date de dépôt: **18.12.85**

(30) Priorité: **26.12.84 FR 8419832**
**26.12.84 FR 8419833**

(43) Date de publication de la demande: **09.07.86**
**Bulletin 86/28**

(84) Etats contractants désignés: **AT BE CH DE GB IT LI LU NL SE**

(71) Demandeur: **ATOCHEM, 4 & 8, Cours Michelet La Défense 10, F-92800 Puteaux (FR)**

(72) Inventeur: **Bertocchio, René, 31, rue des Vallières Vouries, F-69390 Vernaison (FR)**
Inventeur: **Gagnieur, André, 7, route de la Nation, F-69270 Rochetaillee sur Saone (FR)**
Inventeur: **Mathais, Henri, 87, Chemin de l'Indiennerie, F-69230 Saint Didier au Mont d'Or (FR)**

(74) Mandataire: **Leboulenger, Jean et al, ATOCHEM Département Propriété Industrielle, F-92091 Paris la Défense 10 Cédex 42 (FR)**

(54) **Compositions à base de solvants chlorofluores pour machines à absorption.**

(57) L'invention concerne des compositions de solvants et de fluides calogènes pour appareils de chauffage ou de refroidissement par absorption.

Les compositions selon l'invention contiennent un chlorofluoroéthane à point d'ébullition compris entre −40 et +50° C et au moins un solvant à point d'ébullition supérieur à 100° C, choisi parmi les dérivés du trifluorochloroéthylène de formule:

$$C_m Cl_{2m+1} - (CF_2 - CFCl)_n - X$$

dans laquelle m est égal à 0 ou 1, n est un nombre entier allant de 1 à 4 mais au moins égal à 2 si m est nul, et X représente un atome d'hydrogène ou de chlore, X ne pouvant être H que si m est égal à 1.

EP 0 187 098 A1

# COMPOSITIONS A BASE DE SOLVANTS CHLOROFLUORES POUR MACHINES A ABSORPTION

La présente invention concerne des compositions de solvants et de fluides calogènes, utilisables dans les appareils de chauffage ou de refroidissement par absorption.

Ces machines dont le principe de fonctionnement repose sur l'extraction par absorption d'énergie calorifique à bas niveau, empruntée par exemple à l'air extérieur pour une pompe à chaleur ou à une enceinte frigorifique pour un groupe frigorigène, et sur la restitution de cette énergie au local à chauffer ou à l'espace environnant dans le second cas, mettent en oeuvre un composé aisément vaporisable (le calogène) et un composé de faible volatilité qui est de préférence bon solvant du premier.

Dans une pompe à chaleur, la solution enrichie en fluide calogène après absorption retourne au bouilleur où les deux fluides sont à nouveau séparés par chauffage. Le calogène est vaporisé et envoyé dans le circuit de la pompe où il subit d'abord une condensation à température élevée, puis une détente suivie d'une évaporation avant retour à l'absorbeur.

Les couples de calogène et de solvant choisis doivent répondre à un certain nombre de critères liés au fonctionnement même de ce type de machine :

a) Les points d'ébullition sous pression normale doivent présenter un écart d'au moins 150 à 200°C afin d'éviter l'emploi d'un dispositif de rétrogradation du solvant.

b) Le point d'ébullition du fluide calogène ne doit être ni trop bas pour éviter l'emploi de pressions de service importantes, ni trop haut pour respecter la condition précédente.

c) Les deux composés doivent être complètement miscibles dans les proportions d'emploi sur un grand domaine de températures.

d) Le solvant doit rester liquide à basse température et présenter un point de solidification aussi bas que possible afin de conserver une viscosité acceptable à des températures de l'ordre de -20 à 0°C.

e) Le mélange doit présenter une excellente stabilité thermique et chimique dans le domaine de température impliqué par le cycle thermodynamique, c'est-à-dire dans une zone de température allant, dans le cas particulier des pompes à chaleur, de -10°C pour la source froide (absorbeur) à 150-180°C pour le bouilleur.

f) Les produits choisis ne doivent enfin présenter aucun caractère de toxicité.

Pour des raisons de sécurité et également pour tenir compte de leur bonne stabilité thermique et chimique, la plupart des fluides calogènes sont choisis parmi les hydrocarbures fluorés et, plus spécialement, parmi les hydrocarbures chlorofluorés à un ou deux atomes de carbone qui correspondent le mieux aux critères de volatilité et de solubilité définis plus haut. Les composés les plus utilisés sont le dichlorodifluorométhane (R 12), le dichlorofluorométhane (R 21), le chlorodifluorométhane (R 22), le chlorofluorométhane (R 31), le dichloro-1,2 tétrafluoro-1,1,2,2 éthane (R 114), le dichloro-1,1 tétrafluoro-1,2,2,2 éthane (R 114a), le chloropentafluoroéthane (R 115), le dichloro-1,1 trifluoro-2,2,2 éthane (R 123), le dichloro-1,2 trifluoro-1,2,2 éthane (R 123a), le dichloro-1,1 trifluoro-1,2,2 éthane (R 123 b), le chloro-1 tétrafluoro-1,2,2,2 éthane (R 124), le chloro-1 tétrafluoro-1,1,2,2 éthane (R 124a), le chloro-1 trifluoro-1,2,2 éthane (R 133), le chloro-1 trifluoro-2,2,2 éthane (R 133a), le chloro-1 trifluoro-1,1,2 éthane (R 133b) et le chloro-1 difluoro-1,1 éthane (R 142b).

Les meilleurs solvants, lorsque l'hydrocarbure fluoré comporte un ou plusieurs atomes d'hydrogène, sont ceux susceptibles de former des associations intermoléculaires par liaison hydrogène et se recrutent dans les classes des dérivés carbonyle (esters, cétones,

amides, lactames), des alcools ou des éthers de polyéthylèneglycols. Parmi les solvants les plus utilisés, on peut citer les éthers diméthyliques du tri- ou tétra-éthylèneglycol (brevet SU 150113 et demandes JP 79-152257 et DE 3202377), la N-méthyl-pyrrolidone (brevet SU 643524 et demandes JP 79-145774 et JP 82-132545), le N,N-diméthylformamide (demande JP 82-121759) et le phtalate de dibutyle (brevet SU 346326). Ont également été préconisés comme solvants, des imidazolines et des phosphoramides (demandes JP 82-132544 et DE 2944189) ainsi que des dérivés de l'alcool tétrahydrofurfurylique (brevet U.S. 4251382).

Dans le bouilleur des machines à absorption, les solutions enrichies en fluide de travail sont portées à des températures élevées. Les parois du bouilleur sont généralement constituées de matériaux métalliques à base de fer, d'aluminium ou de cuivre qui, sous l'effet de la température, peuvent constituer un élément de déstabilisation du couple calogène-solvant. Il est en effet bien connu qu'un hydrocarbure chlorofluoré du type $C_nH_{2n+2-x-y}F_xCl_y$, chauffé en présence d'un des métaux précités et d'un composé donneur d'hydrogène, subit une transformation quantitative avec substitution progressive des atomes de chlore par des atomes d'hydrogène pris en solvant. Selon la réactivité du donneur et la structure de l'hydrocarbure fluoré, il se forme également, lorsque n est égal ou supérieur à 2, une proportion plus ou moins importante de dérivés éthyléniques. Ainsi, dans le cas du chloro-1 trifluoro-2,2,2 éthane (R 133a), ces transformations s'effectuent selon le schéma réactionnel suivant :

$$CF_3-CH_2Cl + Fe \longrightarrow CF_3-CH_2^{\bullet} + FeCl^{\bullet}$$

$$CF_3-CH_2^{\bullet} + R-H \text{ (solvant)} \longrightarrow CF_3-CH_3 + R^{\bullet}$$

$$CF_3-CH_2^{\bullet} + FeCl^{\bullet} \longrightarrow CF_2 = CH_2 + FeClF$$

Quant au chloro-1 tétrafluoro-1,2,2,2 éthane (R 124), chauffé en présence de N-méthyl-pyrrolidone et de fer, il donne du tétrafluoro-1,1,1,2 éthane (R 134a) et un mélange de difluoro-1,1 éthylène et de trifluoro-éthylène.

Cette réaction s'accompagne de la formation de goudrons aux dépens du solvant et d'une corrosion importante due à l'action des halogénures métalliques formés. La modification de la nature du couple calogène/solvant, les effets de la corrosion et notamment la formation de gaz incondensables provoquent la détérioration des conditions de fonctionnement de la pompe à chaleur et peuvent entraîner trés rapidement sa mise hors d'usage.

Différentes propositions ont été faites en vue de remédier à cet inconvénient et assurer une fiabilité minimale de l'ordre de 10 000 heures. La plus simple consiste à stabiliser le mélange fluide calogène chlorofluoré/solvant par introduction d'un additif en une proportion ne modifiant pas sensiblement les caractéristiques physicochimiques et thermodynamiques du couple calogène/solvant. Malheureusement, ces additifs n'offrent qu'une efficacité limitée dans le temps et leur action se résume surtout à un allongement de la période d'inhibition.

Un autre procédé consiste à remplacer l'hydrocarbure chlorofluoré par un alcool polyfluoré tel que le trifluoro-éthanol (demandes JP 80-16315, 81-88485, 82-132545 et 83-98137). Cependant, les points d'ébullition relativement élevés de ces alcools (73,5°C pour le trifluoro-éthanol) conduisent à faire fonctionner une partie de l'installation (l'évaporateur) à une pression nettement inférieure à la pression normale.

On peut enfin modifier la nature du solvant et le choisir dans une famille de produits ne donnant pas lieu, en présence de métaux et d'hydrocarbures chlorofluorés, aux réactions décrites ci-dessus. Dans cette optique, l'identité de structure a été mise à profit dans les brevets FR 2 075 236 et U.S. 4 003 215 qui utilisent des couples d'hydrocarbures chlorofluorés comme solvant et fluide de travail. Cependant, pour les couples R 12/R 11 et R 12/R 113 cités dans les exemples, les faibles écarts de points d'ébullition (de l'ordre de 40 à 80°C) nécessitent la mise en oeuvre de processus technologiques complexes pour effectuer la séparation solvant/calogène à la sortie du bouilleur.

La présente invention a donc pour objectif de remédier aux inconvénients de la technique antérieure et de proposer des couples solvant chlorofluoré/calogène chlorofluoré, stables à température

élevée en présence de métaux et utilisables notamment dans les systèmes de chauffage ou de réfrigération par absorption.

Il a maintenant été trouvé que les dérivés du trifluorochloroéthylène ayant un point d'ébullition supérieur à 100°C et répondant à la formule générale :

$$C_mCl_{2m+1}-(CF_2-CFCl)_n-X \qquad (I)$$

dans laquelle m est égal à 0 ou 1, n est un nombre entier allant de 1 à 4, mais au moins égal à 2 si m est nul, et X représente un atome d'hydrogène ou de chlore, X ne pouvant être H que si m est égal à 1, forment avec les chlorofluoroéthanes servant de fluide de travail (calogène) des mélanges qui sont stables à température élevée en présence de matériaux métalliques, notamment ferreux, et peuvent donc, sans addition de stabilisant, être utilisés dans les appareils de chauffage ou de réfrigération par absorption sans risque de décomposition. Leur inertie chimique permet l'utilisation de matériaux courants pour la réalisation des parties chaudes de l'installation dont la sécurité est accrue par le caractère absolument ininflammable desdits mélanges.

L'invention a donc pour objet des compositions constituées, d'une part, d'un chlorofluoroéthane à point d'ébullition compris entre -40 et + 50°C, de préférence entre -20 et + 20°C, et, d'autre part, d'au moins un composé de formule (I) à point d'ébullition supérieur à 100°C.

Les composés de formule (I) dans laquelle m est égal à 0, c'est-à-dire les composés de formule :

$$Cl-(CF_2CFCl)_n-Cl \qquad (I\text{-}a)$$

sont des huiles chlorofluorées de faible poids moléculaire, obtenues par craquage thermique de polymères du trifluorochloroéthylène. Il s'agit en général de coupes dont le poids moléculaire moyen est de l'ordre de 500. Les points d'ébullition de ces produits se situent entre 140 et 240°C sous pression normale et présentent donc, par rapport aux chlorofluoroéthanes utilisés comme calogènes, une différence de volatilité suffisante. D'autre part, leurs points de congélation très bas permettent leur emploi sous forme liquide dans

une trés large plage de température. Un exemple typique d'huile chlorofluorée selon l'invention est celle commercialisée par la demanderesse sous le nom d'Huile Voltalef 1 S ; son point de congélation est inférieur à -55°C et son point d'ébullition est de 141°C/760 torr.

Les composés de formule (I) dans laquelle m est égal à 1, c'est-à-dire ceux de formule :

$$CCl_3-(CF_2CFCl)_n-X \qquad (I-b)$$

peuvent être préparés selon des procédés connus par télomérisation du trifluorochloroéthylène avec le chloroforme ou le tétrachlorure de carbone comme télogène (Boutevin et al., Tetrahedron Letters n° 12, 1973, pp. 887-890 et Eur. Polym. J. 1976, 12, 219). La viscosité et la volatilité des composés de formule (I-b) dépendent de la nature du télogène et du degré de télomérisation. En combinant ces deux paramètres, on obtient des solvants chlorofluorés à points d'ébullition supérieurs à 100°C conservant leur état liquide sur un large domaine de température. A titre d'exemple, les télomères du trifluorochloroéthylène avec le chloroforme présentent les points d'ébullition suivants, calculés par la méthode du B.P.N. (boiling point number) selon J. Chem. Eng. Data 1967, p. 214.

| Télomère | PEb/760 torr |
|---|---|
| $CCl_3-CF_2-CFClH$ | 142°C |
| $CCl_3-(CF_2-CFCl)_2H$ | 203°C |
| $CCl_3-(CF_2-CFCl)_3H$ | 256°C |

Parmi les chlorofluoroéthanes conformes à la présente invention, on préfère utiliser le chloro-1 tétrafluoro-1,2,2,2 éthane (R 124), le chloro-1 trifluoro-2,2,2 éthane (R 133a) et le dichloro-1,2 tétrafluoro-1,1,2,2 éthane (R 114).

Les compositions selon l'invention présentent un domaine étendu

de miscibilité complète. Les proportions respectives de chlorofluoroéthane et de composé de formule (I) ne sont pas critiques et ne sont limitées que par les solubilités mutuelles.

Les essais suivants A à C, réalisés avec des couples hydrocarbure chlorofluoré/N-méthyl-pyrrolidone (NMP), sont donnés à titre de témoins et sont à comparer aux exemples 1 à 10 qui illustrent l'invention sans la limiter.

ESSAI A

5 mmoles de R 124 sont introduites dans un tube pyrex à paroi épaisse renfermant 3 g de NMP et une éprouvette métallique de 250 mg d'acier ordinaire convenablement nettoyé. Le tube est refroidi à la température de l'azote liquide, scellé sous vide et maintenu ensuite à une température de 180°C durant 100 heures. Il est ensuite à nouveau replongé dans l'azote liquide, relié à une rampe à vide et ouvert à l'aide d'un dispositif approprié. Les produits volatils sont récupérés par purgeage à basse température et analysés par chromatographie en phase gazeuse. L'analyse montre que 55,4 % du R 124 initial ont été transformés dont environ 50 % en $CF_3$-$CH_2F$ (R 134a).

Si on remplace l'éprouvette d'acier ordinaire par une éprouvette de 620 mg d'aluminium et chauffe à 180°C pendant 1000 heures, le taux de décomposition du R 124 atteint 97,4 %.

ESSAI B

5 mmoles de R 133a, 3 g de NMP et une éprouvette d'acier ordinaire de 250 mg sont placés dans un tube pyrex et le mélange est maintenu à 180°C durant 100 heures. Après ouverture du tube, on constate que 76,1 % du R 133a initial ont été transformés dont environ 62,5 % en $CF_3CH_3$ et 8,5 % en $CF_2$=$CH_2$.

ESSAI C

Un mélange de 5 mmoles de R 124, 3 g de NMP et 45 mg de phosphate de tributyle est placé, avec une éprouvette de 250 mg d'acier

ordinaire, dans un tube pyrex à paroi épaisse et le tout est maintenu à 180°C pendant 100 heures. Après ouverture du tube, on constate que 28,9 % du R 124 initial ont été transformés, dont 25 % en R 134a.

EXEMPLE 1

5 mmoles de R 124, 3 g de pentachloro-1,1,1,3,3 trifluoro-2,2,3 propane et une éprouvette de 250 mg d'acier ordinaire sont placés dans un tube pyrex et le mélange est porté à 180°C pendant 100 heures. Après ouverture du tube, on constate que seulement 1,3 % du R 124 initial ont été transformés.

EXEMPLES 2 A 7

Le tableau suivant résume les résultats obtenus en opérant comme à l'exemple 1 avec d'autres compositions selon l'invention. Dans la dernière colonne est indiquée la solubilité du chlorofluoroéthane dans le solvant de formule (I), cette solubilité étant mesurée à température et pression ordinaires et exprimée en grammes de chlorofluoroéthane dissous pour 100 g de mélange. Les abréviations S 416a et S 426 ont la signification suivante :

S 416a : Hexachloro-1,1,1,3,5,5 hexafluoro-2,2,3,4,4,5 pentane ou $CCl_3-CF_2-CFCl-CF_2-CFCl_2$

S 426 : Pentachloro-1,1,1,3,5 hexafluoro-2,2,3,4,4,5 pentane ou $CCl_3-CF_2-CFCl-CF_2-CFClH$

Le pentachloro-1,1,1,3,3 trifluoro-2,2,3 propane utilisé à l'exemple 1 et le solvant S 416a utilisé aux exemples 2, 4 et 6 sont décrits dans Eur. Polym. J. 1976, 12, 219. Leurs points d'ébullition respectifs sont de 156°C et 217°C sous pression normale.

| Exemple | Chlorofluo-roéthane | Solvant (I) | Taux de décomposition du chlorofluoroéthane | Solubilité |
|---|---|---|---|---|
| 2 | R 124 | S 416a | 0,5 % | 12,8 % |
| 3 | R 124 | S 426 | 0,2 % | 12,0 % |
| 4 | R 133a | S 416a | 1,7 % | 24,6 % |
| 5 | R 133a | S 426 | 0,8 % | 26,3 % |
| 6 | R 114 | S 416a | 0,3 % | 30,5 % |
| 7 | R 114 | S 426 | 0,2 % | 28,2 % |

EXEMPLE 8

5 mmoles de R 124, 3 g d'Huile Voltalef 1 S et une éprouvette de 250 mg d'acier ordinaire sont placés dans un tube pyrex et le mélange est porté à 180°C pendant 100 heures. Après ouverture du tube, on constate que seulement 0,3 % du R 124 initial a été transformé.

EXEMPLE 9

On opère comme à l'exemple 8 en remplaçant le R 124 par 5 mmoles de R 133a. L'analyse du mélange résiduel montre que le taux de décomposition du R 133a ne dépasse pas 0,6 %.

EXEMPLE 10

On opère comme à l'exemple 8 avec 5 mmoles de R 114. Le taux de transformation du R 114 ne dépasse pas 1 %.

REVENDICATIONS

1. Compositions pour appareils de chauffage ou de refroidissement par absorption, caractérisées en ce qu'elles contiennent un chlorofluoroéthane à point d'ébullition compris entre -40 et + 50°C et au moins un solvant à point d'ébullition supérieur à 100°C, choisi parmi les dérivés du trifluorochloroéthylène de formule générale :

$$C_mCl_{2m+1}-(CF_2-CFCl)_n-X \qquad (I)$$

dans laquelle m est égal à 0 ou 1, n est un nombre entier allant de 1 à 4, mais au moins égal à 2 si m est nul, et X représente un atome d'hydrogène ou de chlore, X ne pouvant être H que si m est égal à 1.

2. Compositions selon la revendication 1, dans lesquelles le solvant est une huile chlorofluorée de formule :

$$Cl-(CF_2CFCl)_n-Cl$$

ayant un poids moléculaire moyen d'environ 500.

3. Compositions selon la revendication 1, dans lesquelles le solvant est le pentachloro-1,1,1,3,3 trifluoro-2,2,3 propane, l'hexachloro-1,1,1,3,5,5 hexafluoro-2,2,3,4,4,5 pentane ou le pentachloro-1,1,1,3,5 hexafluoro-2,2,3,4,4,5 pentane.

4. Compositions selon l'une des revendications 1 à 3, dans lesquelles le chlorofluoroéthane a un point d'ébullition compris entre -20 et +20°C.

5. Compositions selon la revendications 4, dans lesquelles le chlorofluoroéthane est le chloro-1 tétrafluoro-1,2,2,2 éthane, le chloro-1 trifluoro-2,2,2 éthane ou le dichloro-1,2 tétrafluoro-1,-1,2,2 éthane.

Office européen des brevets

**RAPPORT DE RECHERCHE EUROPEENNE**

0187098

Numero de la demande

EP 85 40 2545

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.⁴) |
|---|---|---|---|
| | | | C 09 K 5/04 |
| Y | US-A-2 146 884 (DAUDT)<br>* Revendication 1; page 1, lignes 41-55; colonne 2 *<br>--- | 1 | |
| Y | GB-A- 443 340 (THOMSON)<br>* Revendication 1 *<br>--- | 1 | |
| A | US-A-4 003 215 (ROACH)<br>* Revendications 1,4 *<br>--- | 1,5 | |
| A | US-A-2 005 706 (DAUDT°)<br>----- | | |
| | | | **DOMAINES TECHNIQUES RECHERCHES (Int. Cl.⁴)** |
| | | | C 09 K<br>F 01 K<br>F 25 B<br>H 01 B |

Le présent rapport de recherche a été établi pour toutes les revendications

| Lieu de la recherche | Date d'achèvement de la recherche | Examinateur |
|---|---|---|
| LA HAYE | 26-03-1986 | NICOLAS H.J.F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82